# EUROPÄISCHE PATENTSCHRIFT

(11) **EP 0 443 143 B1**
(45) Veröffentlichungstag und Bekanntmachung des Hinweises auf die Patenterteilung: **08.12.1993**
(21) Anmeldenummer: 90124285.9
(22) Anmeldetag: 14.12.1990
(51) Int. Cl.: B29C 47/10

(54) **Schneckenstrangpresse zum Verarbeiten eines Materialstreifens aus Kautschuk oder Kunststoff**
Screw extruder for the processing of a strip of rubber or plastic
Extrudeuse à vis pour le traitement d'une bande de caoutchouc ou de plastique

(30) Priorität: 21.02.1990 DE 4005400
(43) Veröffentlichungstag der Anmeldung: 28.08.1991
(73) Patentinhaber: Continental Aktiengesellschaft, 30165 Hannover (DE)
(72) Erfinder: Klabunde, Karlheinz, W-3007 Gehrden 1 (DE); Walther, Manfred, W-3006 Burgwedel (DE)

(56) Entgegenhaltungen:
- FR-A- 2 650 216
- GB-A- 487 948
- US-A- 2 947 030
- US-A- 3 656 382
- US-A- 3 858 857
- US-A- 4 286 882

## Beschreibung

Die Erfindung betrifft eine Schneckenstrangpresse zum Verarbeiten eines Materialstreifens aus Kautschuk oder Kunststoff, der kontinuierlich in eine Einspeiseöffnung der Schneckenstrangpresse geführt wird, wobei im Bereich der Einspeiseöffnung eine parallel zur Extruderschnecke angeordnete Einzugswalze vorhanden ist, die zusammen mit dem die Einspeiseöffnung durchdringenden Abschnitt der Extruderschnecke einen Einzugsspalt für den Materialstreifen bildet, vgl. z.B. die US-A-3858857.

Schneckenstrangpressen werden zum Extrudieren von Schläuchen, Bändern oder Profilstreifen aus Kautschuk oder Kunststoff angewandt. Die Extrudate sollen mit sehr hoher Maßhaltigkeit und mit gleichbleibender Geschwindigkeit aus dem Spritzkopf der Schneckenstrangpresse austreten.

Es wurde festgestellt, daß dafür eine gleichmäßige Beschickung der Extruderschnecke anzustreben ist. Der Füllungsgrad der Schneckengänge soll gleichmäßig sein. Der Zuführung des zu verarbeitenden Materials in die Einspeiseöffnung der Schneckenstrangpresse kommt somit erhebliche Bedeutung zu.

Um die Beschickung zu vereinfachen, ist es bekannt, das zu verarbeitende Material in die Einspeiseöffnung der Schneckenstrangpresse in Form eines kontinuierlichen Streifens zuzuführen. Um die Beschickung dem Durchsatzvermögen der Schneckenstrangpresse anzupassen, ist eine Vielzahl von Lösungen bekannt, den Querschnitt des Materialstreifens bzw. das damit zugeführte Materialvolumen veränderlich zu gestalten. Dabei wird die Stauwulstbildung über der Schnecke für die Steuerung von Abbremsrollen in der Streifenzufuhr oder für die Änderung des Querschnittes durch unterschiedliches Ausschneiden des Streifens aus einem Mischungsfell ausgenutzt.

Diese Möglichkeiten der unterschiedlichen Materialzufuhr können nicht vermeiden, daß in bestimmten Fällen, z.B. bei der Verarbeitung sehr weicher elastomerer Materialmischungen, sich ein stetig aufbauender und aus der Einspeiseöffnung herausdringender Materialwulst bildet, obwohl der zulaufende Streifen dem Durchsatzvermögen der Schneckenstrangpresse an sich angepaßt ist. Dieser nachteilige Effekt resultiert daraus, daß gewisse Mischungen ein schlechteres Einzugsverhalten in die Strangpresse haben als andere. Durch das Vorsehen einer Einzugswalze wurde versucht, dieses Einzugsverhalten in der Schneckenstrangpresse zu verbessern.

Es wurde aber festgestellt, daß das Einzugsverhalten von weichen Mischungen dennoch zu nachteiligen Füllgraddifferenzen in den Schneckengängen führen kann. Bei der Vielfalt der Verarbeitungsmaterialien gibt es Fütterstreifen, die schlecht und ungleichmäßig von der Extruderschnecke angenommen werden, so daß der notwendige gleichmäßige Austrag des Schneckenextruders nicht erbracht werden kann. Die ungleichmäßige Förderung führt zu dem nachteiligen Pumpeffekt der Schneckenstrangpresse.

Es wurde versucht, die gleichmäßige Materialannahme im Einspeiseteil des Schneckenextruders durch unterschiedliche Einzugsgeometrien im Schneckenbereich zu lösen. Hierbei ist nachteilig, daß für jede Mischungsart eine spezielle Einzugsgeometrie notwendig ist. Aufwendige Reinigungen und Umrüstarbeiten der Schneckenstrangpresse sind bei einer häufig wiederkehrenden Produktumstellung die nachteilige Folge.

Der Erfindung liegt die Aufgabe zugrunde, eine Schneckenstrangpresse der eingangs geschilderten Art derart auszugestalten, daß ihr Einzugsverhalten verbessert und die Extrusionsqualität wesentlich erhöht wird.

Die Aufgabe wird erfindungsgemäß durch die im Kennzeichen des Anspruchs 1 aufgeführten Merkmale gelöst.

Die Zulaufrolle ist in ihrer Form der Einspeiseöffnung und in ihrem Gewicht der zu erwartenden Stauwulstbildung zwischen Einzugswalze und Extruderschnecke angepaßt. Auspreßseitig ist ein Zulaufspalt für den Fütterstreifen zwischen der Gehäusekante der Einspeiseöffnung und der Rollenperipherie vorhanden. Die Zulaufrolle ist quer zur Extruderachse drehbar gelagert, so daß die vom einlaufenden Fütterstreifen hervorgerufene Rollendrehung einen möglicherweise aufsteigenden Stauwulst in den materialaufnehmenden Teil des Schneckengewindes umlenkt. Dieses führt zu einem verbesserten Einzug des zu verarbeitenden Materials in die Extruderschnecke.

Die vertikal bewegliche Lagerung der Zulaufrolle läßt unterschiedliche Höhenlagen der Rolle zu. Unterschiedliche Stauvolumina können vergleichmäßigt werden, wobei die Zulaufrolle mit ihrem Gewicht auf den Stauwulst drückt und eine zusätzliche Einzugshilfe darstellt.

Durch die Erfindung wird ein ständiger gleichmäßiger Einzug des Fütterstreifens und damit eine gleichmäßige Schneckenfüllung erreicht.

In vorteilhafter Ausgestaltung der Erfindung ist die Zulaufrolle außerhalb der Einspeiseöffnung auf dem Gehäuse schwenkbar gelagert. Für Reinigungszwecke des Extruders kann die Zulaufrolle völlig aus der Einspeiseöffnung herausgeschwenkt werden.

In weiterer vorteilhafter Ausgestaltung der Erfindung ist die Achse der Zulaufrolle in seitlichen Vertikalstützen geführt. Es wird eine senkrecht zu der Extruderachse liegende Verschiebbarkeit der Zulaufrolle erreicht.

In weiterer vorteilhafter Ausgestaltung der Erfindung ist die Eintauchtiefe der Zulaufrolle durch einen Anschlag begrenzt. Durch diesen Anschlag wird die Höhenlage der Zulaufrolle nach unten begrenzt, so daß ein freies Minimalvolumen über dem Einzugsspalt der Schneckenstrangpresse erhalten bleibt.

Gemäß der Ausbildung nach Anspruch 5 ist der Anschlag einstellbar. Die Höhenlage kann so in einfacher Weise auf die unterschiedlichen Verarbeitungseigenschaften verschiedener Mischungen eingestellt werden.

Durch die Ausbildung gemäß Anspruch 6 wird eine automatische Sicherung der Einspeiseöffnung erreicht, wenn die Zulaufrolle aus der Einspeiseöffnung herausgeschwenkt wird. Die die Einspeiseöffnung abdeckende Klappe kann kleiner als die Einspeiseöffnung ausgebildet sein, um das Einfädeln des zu verarbeitenden Materialstreifens bei Fütterungsbeginn zu ermöglichen.

Gemäß der vorteilhaften Ausgestaltung nach Anspruch 7 weist die Zulaufrolle eine haftungserhöhende Oberfläche auf. Eine rauhe Oberfläche der Zulaufrolle führt zu einem besseren Antreiben der Zulaufrolle durch den Materialstreifen oder umgekehrt.

Für den Fall, daß der Zugeffekt des Materialstreifens nicht zum Antreiben der Zulaufrolle ausreicht, kann gemäß Anspruch 8 die Zulaufrolle motorisch antreibbar ausgebildet sein.

Durch die Erfindung wird in der Einspeiseöffnung ein beobachtungsfreier verfahrenssicherer Ablauf erreicht. über dem Einzugsspalt in der Einspeiseöffnung stellt sich stets ein gleichmäßiges Stauwulstvolumen ein, da ein wirksames und gleichmäßiges Einzugsverhalten der Schneckenstrangpresse vorliegt.

Anhand der Zeichnung wird nachstehend ein Ausführungsbeispiel der Erfindung näher erläutert. Es zeigt
- Fig. 1: den Einspeisebereich einer Schneckenstrangpresse im Längsschnitt,
- Fig. 2: einen Schnitt gemäß Linie II-II in Fig. 1.

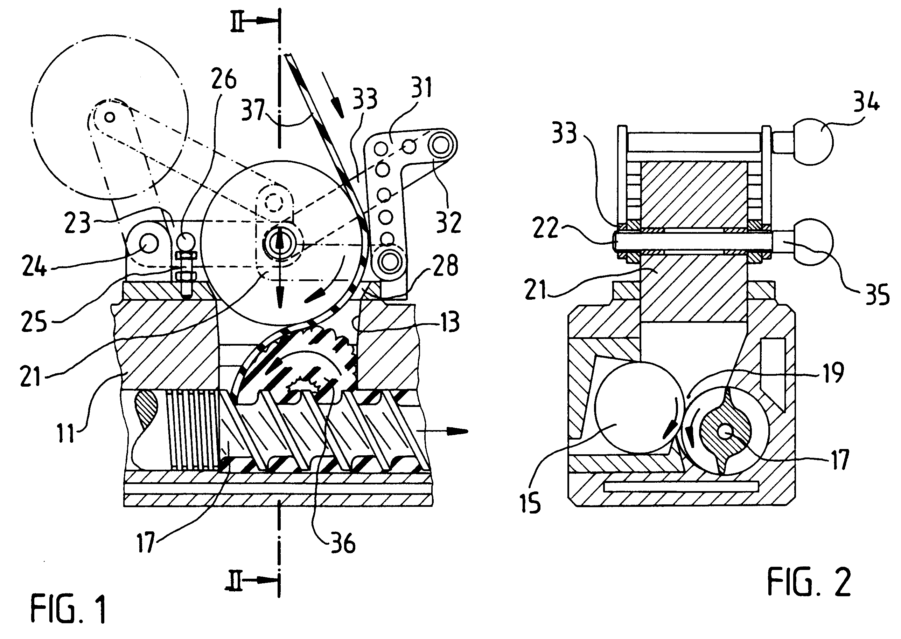

Die in den Fig. 1 und 2 gezeigte Schneckenstrangpresse weist einen Einzugsbereich auf, in dem das Extrudergehäuse 11 unterbrochen ist und eine Einspeiseöffnung 13 bildet. In dieser Einspeiseöffnung 13 ist eine Einzugswalze 15 parallel zur Extruderschnecke 17 angeordnet. Extruderschnecke 17 und Einzugswalze 15 bilden zwischen sich den Einzugsspalt 19.

Über der Einspeiseöffnung 13 ist eine teilweise in die Einspeiseöffnung 13 ragende Zulaufrolle 21 angeordnet. Diese Zulaufrolle 21 ist drehbar auf einer Achse 22 angeordnet, die im Ende eines Hebelpaares 23 gelagert ist. Die Zulaufrolle 21 ist über das Hebelpaar 23 schwenkbar außerhalb der Einspeiseöffnung 13 in einem Lagerbock 24 gelagert. Auf der Gehäuseoberfläche ist ein einstellbarer Anschlagbolzen 25 vorhanden, der mit einem seitlichen Anschlag 26 des Hebels 23 zusammenwirkt und die Eintauchtiefe der Zulaufrolle 21 in der Einspeiseöffnung 13 begrenzt. Zulaufrolle 21 und das Extrudergehäuse 11 bilden anpreßseitig einen Zulaufspalt 28.

Auspreßseitig ist eine schwenkbare Gitterklappe 31 auf dem Gehäuse 11 gelagert, durch die die freie Einspeiseöffnung 13 zum Teil abdeckbar ist. Der freie, kürzere Endabschnitt 32 der Klappe 31 ist rechtwinklig abgesetzt und mit einem Ende eines Gelenkhebelpaares 33 verbunden, das mit seinem anderen Ende auf der Achse 22 der Zulaufrolle 21 schwenkbar gelagert ist. Gitterklappe 31 und Zulaufrolle 21 können über Handgriffe 34 und 35 betätigt werden.

In der Fig. 1 ist der sich durch das notwendige Überangebot von zugeführtem Material bildende Stauwulst 36 sichtbar, der mit dem kontinuierlich zugeführten Materialstreifen 37 in Berührung steht und in Richtung Einzugsspalt 19 gezogen wird. Die Zulaufrolle 21 wird durch die Umschlingung des vom Einzugsspalt 19 eingezogenen Materialstreifens 37 gedreht.

Die Wirkungsweise der beschriebenen Vorrichtung ist wie folgt.

Der zulaufende Materialstreifen 37 wird zum Fütterungsbeginn bei abgehobener Zulaufrolle 21 (strichpunktierte Darstellung in Fig. 1) in den Einzugsspalt 19 zwischen Schnecke 17 und Einzugswalze 15 eingeführt. Die Gitterklape 31 wird hoch- und die Zulaufrolle 21 in die Betriebsstellung zurückgeschwenkt. Dabei legt sich der Materialstreifen 37 auspreßseitig um die Zulaufrolle 21 und wird umfangsmäßig nach unten geführt. Die Zulaufrolle 21 wird durch den stetig von der Extruderschnecke 17 eingezogenen Streifen 37 in Drehung versetzt. Der als Materialvorlage notwendige, sich bildende Stauwulst 36 soll möglichst konstant bleiben. Vergrößert sich der Stauwulst 36 aufgrund mangelhaften Einzugsverhalten der Mischung, so wird einerseits das Gewicht der Zulaufrolle 21 und andererseits der den Stauwulst 36 bei seiner Zulaufbewegung nach unten ziehende Materialstreifen 37 auf den Stauwulst 36 einwirken. Durch diese beiden Maßnahmen wird ein sofort verbessertes Einzugsverhalten erreicht.

## Patentansprüche

1. Schneckenstrangpresse zum Verarbeiten eines Materialstreifens aus Kautschuk oder Kunststoff, der kontinuierlich in eine Einspeiseöffnung der Schneckenstrangpresse geführt wird, wobei im Bereich der Einspeiseöffnung eine parallel zur Extruderschnecke angeordnete Einzugswalze vorhanden ist, die zusammen mit dem die Einspeiseöffnung durchdringenden Abschnitt der Extruderschnecke einen Einzugsspalt für den Materialstreifen bildet,
**gekennzeichnet durch** folgende Merkmale:
- über der Einspeiseöffnung (13) ist eine quer zur Extruderachse liegende, drehbare Zulaufrolle (21) angeordnet,
- die Zulaufrolle (21) ragt umfangsmäßig zum Teil in die Einspeiseöffnung (13) unter Bildung eines Zulaufspaltes (28) zwischen der Zulaufrolle (21) und dem auspreßseitigen Extrudergehäuse (11) und unter Bildung eines Abstandes zu Einzugswalze (15) und Extruderschnecke (17),
- die Zulaufrolle (21) ist in Vertikalrichtung beweglich gelagert,
- die Zulaufrolle (21) wird vom in etwa von oben zulaufenden Materialstreifen (37) auf der auspreßseitigen Umfangsfläche teilweise umschlungen.

2. Schneckenstrangpresse nach Anspruch 1, dadurch gekennzeichnet, daß die Zulaufrolle (21) drehbar in einem Hebelpaar (23) angeordnet ist, das außerhalb der Einspeiseöffnung (13) auf dem Gehäuse (11) schwenkbar gelagert ist.

3. Schneckenstrangpresse nach Anspruch 1, dadurch gekennzeichnet, daß die Achse (22) der Zulaufrolle (21) in seitlichen Vertikalstützen geführt ist.

4. Schneckenstrangpresse nach Anspruch 2 oder 3, dadurch gekennzeichnet, daß die Eintauchtiefe der Zulaufrolle (21) in der Einspeiseöffnung (13) durch einen Anschlag (25, 26) begrenzt ist.

5. Schneckenstrangpresse nach Anspruch 4, dadurch gekennzeichnet, daß der Anschlag (25) einstellbar ist.

6. Schneckenstrangpresse nach Anspruch 2, dadurch gekennzeichnet, daß auf dem auspreßseitigen Gehäuse (11) eine über die Einspeiseöffnung (13) schwenkbare Klappe (31) angelenkt ist, die mit ihrem anderen, freien Ende (32) mit der Achse (22) der Zulaufrolle (21) gelenkig verbunden ist.

7. Schneckenstrangpresse nach einem der Ansprüche 1 bis 6, dadurch gekennzeichnet, daß die Zulaufrolle (21) eine haftungserhöhende Oberfläche aufweist.

8. Schneckenstrangpresse nach einem der Ansprüche 1 bis 7, dadurch gekennzeichnet, daß die Zulaufrolle (21) motorisch antreibbar ausgebildet ist.

## Claims

1. Screw extruder for processing a strip of material, which is formed from rubber or plastics material and is continuously guided into an inlet aperture of the screw extruder, a feed roller being provided in the region of the inlet aperture and being disposed parallel to the extruder screw, said feed roller forming, together with the portion of the extruder screw penetrating the inlet aperture, a feed gap for the strip of material, characterised by the following features:
- a rotatable admission roller (21) is disposed above the inlet aperture (13) and lies transversely relative to the extruder shaft;
- part of the admission roller (21) protrudes circumferentially into the inlet aperture (13) so as to form an admission gap (28) between the admission roller (21) and the outlet end of the extruder housing (11) and so as to form a spacing between the feed roller (15) and the extruder screw (17);
- the admission roller (21) is mounted so as to be displaceable in a vertical direction;
- part of the strip of material (37), which enters substantially from above, wraps around the admission roller (21) over the circumferential area at the outlet end.

2. Screw extruder according to claim 1, characterised in that the admission roller (21) is rotatably disposed in a pair of levers (23), which pair of levers is pivotably mounted on the housing (11) externally of the inlet aperture (13).

3. Screw extruder according to claim 1, characterised in that the shaft (22) of the admission roller (21) is guided in lateral vertical supports.

4. Screw extruder according to claim 2 or 3, characterised in that the depth of penetration of the admission roller (21) into the inlet aperture (13) is limited by a stop member (25, 26).

5. Screw extruder according to claim 4, characterised in that the stop member (25) is adjustable.

6. Screw extruder according to claim 2, characterised in that a valve (31) is pivotally mounted on the housing (11) at the outlet end, said valve being pivotable via the inlet aperture (13) and being pivotally connected, by its other free end (32), to the shaft (22) of the admission roller (21).

7. Screw extruder according to one of claims 1 to 6, characterised in that the admission roller (21) has an adhesion-increasing surface.

8. Screw extruder according to one of claims 1 to 7, characterised in that the admission roller (21) is adapted to be drivable by means of a motor.

## Revendications

1. Extrudeuse à vis pour le traitement d'une bande de caoutchouc de matière plastique qui est guidée en continu dans une ouverture d'alimentation de l'extrudeuse à vis, dans la zone d'alimentation de laquelle il est monté parallèlement à la vis de l'extrudeuse un cylindre d'introduction qui forme une fente d'introduction de la bande de matière, avec la partie de la vis d'extrudeuse traversant l'ouverture d'alimentation, caractérisée par les caractéristiques suivantes :
- au-dessus de l'ouverture d'alimentation (13) est monté tournant un rouleau d'arrivée (21), disposé transversalement à l'axe de l'extrudeuse,
- le rouleau d'arrivée (21) s'engage périphériquement en partie dans l'ouverture d'alimentation (13) en formant une fente d'arrivée (28), entre le rouleau d'arrivée (21) et le carter (11) de l'extrudeuse, côté extrusion, et en laissant un écartement par rapport au cylindre d'introduction (15) et à la vis d'extrudeuse (17),
- le rouleau d'arrivée (21) est monté mobile verticalement,
- le rouleau d'arrivée (21) est en partie entouré par la bande de matière (37) arrivant à peu près du haut sur la surface périphérique côté extrusion.

2. Extrudeuse à vis selon la revendication 1, caractérisée en ce que le rouleau d'arrivée (21) est monté tournant dans une paire de leviers (23) qui est montée pivotante sur le carter (11), à l'extérieur de l'ouverture d'alimentation (13).

3. Extrudeuse à vis selon la revendication 1, caractérisée en ce que l'axe (22) du rouleau d'arrivée (21) est guidé dans des appuis verticaux latéraux.

4. Extrudeuse à vis selon les revendications 2 ou 3, caractérisée en ce que la profondeur de pénétration du rouleau d'arrivée (21) dans l'ouverture d'alimentation (13) est limitée par une butée (25, 26).

5. Extrudeuse à vis selon la revendication 4, caractérisée en ce que la butée (25) est réglable.

6. Extrudeuse à vis selon la revendication 2, caractérisée en ce que sur le carter (11) côté extrusion s'articule un volet (31) pivotant sur l'ouverture d'alimentation (13), qui avec son autre extrémité (32) libre est relié articulé avec l'axe (22) du rouleau d'arrivée (21).

7. Extrudeuse à vis selon l'une des revendications 1 à 6, caractérisée en ce que le rouleau d'arrivée (21) présente une surface augmentant l'adhérence.

8. Extrudeuse à vis selon l'une des revendications 1 à 7, caractérisée en ce que le rouleau d'arrivée (21) est conçu de manière à pouvoir être entraîné par un moteur.
